# EUROPÄISCHE PATENTANMELDUNG

(11) **EP 4 844 519 A1**
(43) Veröffentlichungstag der Anmeldung: **25.11.2026**
(21) Anmeldenummer: 25177838.7
(22) Anmeldetag: 21.05.2025
(51) Int. Cl.: G05D 16/06

(54) **DRUCKREDUZIERVENTIL**

(71) Anmelder: Georg Fischer JRG AG, 4450 Sissach (CH)
(72) Erfinder: Lehmann, Steffen, 79713 Bad Saeckingen (DE); Wespisser, Frederic, 68640 Muespach (FR)
(74) Vertreter: Li Schrag, Yue

(57) **Zusammenfassung**

Druckreduzierventil für Medien, insbesondre für nichtaggressive, flüssige, gas- oder dampfförmige Medien umfassend:
a. ein Gehäuse, durch welchem das Medien von einer primären Seite zu einer sekundären Seite durchströmt;
b. eine Feder, welche im Gehäuse angeordnet ist;
c. eine Membran, die im Gehäuse eingespannt ist und einerseits unter Federspannung der Feder steht und andererseits vom Mediumsdruck auf der Sekundärseite beaufschlagt wird;
d. eine Trägerplatte mit mindestens zwei Durchgangslöcher, wobei die Trägerplatte fix am Gehäuse montiert ist und der sekundärseitige Mediumsdruck durch die Durchgangslöcher auf die Membran wirkt, wobei die Fläche der Trägerplatte durch eine Mittellinie in eine eintrittsseitige Fläche und eine austrittsseitige Fläche geteilt ist;
e. ein druckentlasteter Schieber, der starr mit der Membran verbunden ist, wobei die starre Verbindung zwischen dem Schieber und der Membran aus mindestens einem Distanzelementen besteht, vorzugsweise mehreren Distanzelementen, dieses Distanzelement mit dem Schieber verbunden und durch die Durchgangslöcher der Trägerplatte ragen und mit einem membranstützenden Membranteller verbunden sind.
f. eine Scheibendichtung oder Dichtungselement, welche auf der Trägerplatte oder dem Schieber angeordnet ist, sodass bei Auslenkung der Membran die Mündung des Schiebers sich der Scheibendichtung bis zum völligen Verschluss nähern und bis zu einem maximalen Durchlassspalt entfernen kann.
dadurch gekennzeichnet, dass
g. die Durchgangslöcher asymmetrisch über die Mittellinie angeordnet und nicht punktsymmetrisch angeordnet sind.

## Beschreibung

### TECHNISCHES GEBIET

Die vorliegende Erfindung betrifft ein Druckreduzierventil. Des Weiteren betrifft die vorliegende Erfindung eine Trägerplatte für ein Druckreduzierventil.

### STAND DER TECHNIK

Das Druckreduzierventil ist eine relevante Vorrichtung für die Wasserversorgung, um einen gewünschten Druck einzustellen. Das Druckreduzierventil ermöglicht, dass sich der Sekundärdruck auf der Ausgangstelle vom Primärdruck auf der Eingangsstelle unterscheidet. Solche Ventile sind sowohl in häuslichen- als auch in der industriellen Wasserversorgung notwendig. Normalerweise ist der Druck auf dem primärseitigen Verteilnetz höher als auf dem sekundärseitigen Abnehmerstrang. Das Druckreduzierventil hat die Funktion einen optimalen Druck für den sekundärseitigen Abnehmerstrang zu gewährleisten. Dadurch erhöht sich die Lebensdauer des Wasserversorgungsinstallation der Sekundärseite, da sie vor zu hohem Druck geschützt wird. Das Druckreduzierventil kann für verschiedene Medien eingesetzt werden, z.B. nicht-aggressive flüssige, gas- oder dampfförmige Medien.

DE 196 54 171 offenbart ein Druckreduzierventil mit einem Gehäuse, einer Membran, und einem druckentlasteten Schieber. Die Membran ist im Gehäuse eingespannt und wird einerseits von der Federspannung und anderseits vom Mediumsdruck auf der Sekundärseite beaufschlagt. Der Schieber ist starr mit der Membran verbunden. Die starre Verbindung zwischen dem Schieber und der Membran besteht aus mindestens einem Distanzelement. Dieses Distanzelement ist auf der Sekundärseite mit dem Schieber verbunden und ragt durch Durchgangslöcher in eine fest installierten Basisscheibe und ist mit einer membranstützenden Trägerplatte verbunden. Der sekundärseitige Mediumsdruck wirkt durch die Durchgangslöcher auf die Membran. Eine Scheibendichtung ist auf der Basisscheibe oder dem Schieber so angeordnet, dass sich bei der Auslenkung der Membran die Mündung des Schiebers der Scheibendichtung bis zum völligen Verschluss nähert und sich bis zu einem maximalen Durchlassspalt entfernen kann.

Allerdings hat dieses bekannte Druckreduzierventil ein Optimierungspotential durch die Modifikation der Trägerplatte. Um einen erwünschten Druck auf der Sekundärseite zu erzielen, muss die Membran eine Mindestdimension haben. Ist diese Anforderung nicht erfüllt, kann der Druck auf der Sekundärseite nicht erreicht werden.

### DARSTELLUNG DER ERFINDUNG

Es ist eine Aufgabe der Erfindung, ein Druckreduzierventil zu präsentieren, welches einen gewünschten Druck auf der Sekundärseite gewährleistet. Es ist eine Aufgabe der Erfindung die Trägerplatte für ein Druckreduzierventil zu optimieren um die Funktion des Druckreduzierventil zu verbessern. Es ist eine weitere Aufgabe der Erfindung, ein Druckreduzierventil zu präsentieren, welches bei Nennvolumenstrom eine geringere Abweichung des Sekundärdrucks zu dem statisch eingestellten Druck aufweist. Diese und andere Aufgaben werden durch die Merkmale der unabhängigen Ansprüche gelöst.Die vorliegende Erfindung umfasst ein Druckreduzierventil für Medien, insbesondere für nichtaggressive, flüssige, gas- oder dampfförmige Medien. Das Druckreduzierventil enthält ein Gehäuse, eine Feder, eine Membran, eine Trägerplatte mit mindestens zwei Durchgangslöcher, einen druckentlasteten Schieber, eine Scheibendichtung. Das Medium durchströmt das Gehäuse von einer primären Seite zu einer sekundären Seite. Die Feder ist im Gehäuse angeordnet. Die Membran ist im Gehäuse eingespannt und wird einerseits von der Federspannung der Feder und von dem Mediumsdruck auf der Sekundärseite beaufschlagt. Die Trägerplatte ist fest am Gehäuse montiert und der sekundärseitige Mediumsdruck wirkt durch die Durchgangslöcher auf die Membran, wobei die Fläche der Trägerplatte durch eine Mittellinie in eine eintrittsseitige und eine austrittsseitige Fläche geteilt ist. Der Schieber ist starr mit der Membran verbunden, wobei die starre Verbindung zwischen dem Schieber und der Membran aus mindestens einem, vorzugsweise mit mehreren Distanzelementen besteht. Dieses Distanzelement ist mit dem Schieber verbunden und ragt durch die Durchgangslöcher der Trägerplatte und ist mit einem membranstützenden Membranteller verbunden. Die Scheibendichtung ist auf der Trägerplatte oder dem Schieber angeordnet, sodass sich bei Auslenkung der Membran die Mündung des Schiebers der Scheibendichtung bis zum völligen Verschluss nähert und bis zu einem maximalen Durchlassspalt entfernen kann. Die Durchgangslöcher sind asymmetrisch über der Mittellinie angeordnet und in der Umfangsrichtung asymmetrisch verteilt. Im montierten Zustand ragt das Stützelement durch ein Durchgangsloch und das Durchgangsloch ist abgedichtet um die Durchströmung des Mediums zu verhindern. Mindest ein anderes Durchgangsloch ist jedoch frei um die Durchströmung des Mediums zu ermöglichen.

In der Trägerplatte die sich zwischen dem Bereich, in dem der Austrittsdruck herrscht, und der Membrane, befindet, hat es Durchgangslöcher, sodass die vorgespannte Feder, abhängig vom aktuell herrschenden Austrittsdruck, den Durchlassspalt vergrössert oder verringert. Die Durchgangslöcher im Bereich der austretenden Strömung sorgen für die Druckverringerung auf der sekundären Seite. Um den strömungsmechanischen Effekt des dynamischen und statischen Drucks zu nutzen, müssen diese Durchgangslöcher im Umfang so angeordnet sein, dass der Saugeffekt unter der Membran zur Wirkung kommt, um in der dynamischen Messung den gewünschten statischen Druck zu erreichen. Der optimale Saugeffekt wird erreicht, wenn die austretende Wasserströmung an den Durchgangslöchern mit einer hohen Strömungsgeschwindigkeit vorbeiströmt und somit einen Unterdruck erzeugt. Es darf dabei nicht zu viel Medium unter der Membran strömen, da so nicht ein optimaler Unterdruck erreicht werden kann. Deswegen muss die Querschnittsfläche der Durchgangslöcher im Austrittsbereich grösser als beim Eintrittsbereich sein. Mit der richtigen Anordnung der Durchgangslöcher kann der statische Druck unter der Membran dem statischen Austrittsdruck gleichgesetzt werden, um somit eine optimale Funktionsweise des Druckreduzierventils zu gewährleisten.

In einem Ausführungsbeispiel beträgt das Flächenverhältnis der aufsummierten Fläche der Durchgangslöcher auf der Austrittsfläche zu der aufsummierten Fläche der Durchgangslöcher auf der Eintrittsfläche 70% zu 30%.

In einer bevorzugten Variante beträgt die gesamte Fläche der Durchgangslöcher weniger als 20% der Gesamtfläche der Trägerplatte.

In einem Ausführungsbeispiel sind die Durchgangslöcher senkrechte oder schräge Bohrungen.

Bevorzugt sind die Durchgangslöcher rund, oval, vieleckig.

In einer vorteilhaften Variante ist die Trägerplatte aus einem Material, welches mit der Trinkwasserverordnung konform ist hergestellt, um die Hygiene, die Lebensdauer und Korrosionsbeständigkeit des Druckreduzierventils zu erhöhen. Vorzugsweise, ist die Trägerplatte aus einer Kupferlegierung, Kunststoff oder Edelstahl.

In einem weiteren Ausführungsbeispiel verbindet das Distanzelement zentrisch den Membranteller und den Schieberflansch, zum Beispiel über radial zur Mitte verlaufende Stege.

Vorteilhaft wäre eine Integrierung eines Sensors zum Bestimmen der physikalischen Grössen im Gehäuse, insbesondere ein Druck- oder Durchflusssensor.

Insbesondere wäre es vorteilhaft, die Sensordaten über eine drahtlose Kommunikation übertragen.

In einer Variante ist ein Überdruckschutzmechanismus im Gehäuse integriert.

In einem vorteilhaften Ausführungsbeispiel ist die Anzahl der Durchgangslöcher auf der austrittsseitigen Fläche grösser, als die Anzahl der Durchgangslöcher auf der eintrittsseitigen Fläche.

In einer Variante, ist ein Durchgangsloch auf der eintrittsseitigen Fläche angeordnet und mindestens drei Durchgangslöcher auf der austrittsseitigen Fläche.

Vorzugsweise, ist mindesten ein Durchgangsloch auf der austrittsseitigen Fläche grösser als die Durchgangslöcher auf der eintrittsseitigen Fläche.

Die vorliegende Erfindung betrifft eine Trägerplatte für ein Druckreduzierventil für Medien. Das Ventil umfasst ein Gehäuse, eine Feder, eine Membran, ein druckentlasteten Schieber, und eine Scheibendichtung umfassend mindestens zwei Durchgangslöcher, wobei das Medium durch das Gehäuse von einer primäre Seite zu einer sekundäre Seite durchströmt, wobei die Trägerplatte fix am Gehäuse montiert ist und der sekundärseitige Mediumsdruck durch die Durchgangslöcher auf die Membran wirkt, wobei die Fläche der Trägerplatte durch eine mittlere Achse in eine Eintrittsfläche und eine Austrittsfläche geteilt wird, wobei die Feder im Gehäuse angeordnet ist, wobei die Membran im Gehäuse eingespannt ist und einerseits unter Federspannung der Feder steht und andererseits vom Mediumsdruck auf der Sekundärseite beaufschlagt wird, wobei der Schieber starr mit der Membran verbunden ist, wobei die starre Verbindung zwischen dem Schieber und der Membran aus mindestens einem Distanzelementen besteht, vorzugsweise mehrere Distanzelementen, dieses Distanzelement ist mit dem Schieber verbunden und ragt durch die Durchgangslöcher der Trägerplatte und ist mit einer membran-stützenden Membranteller verbunden, wobei die Schieberdichtung auf der Trägerplatte oder dem Schieber so angeordnet ist, dass sich bei Auslenkung der Membran die Mündung des Schiebers der Scheibendichtung bis zum völligen Verschluss nähert und sich bis zu einem maximalen Durchlassspalt entfernen kann, dadurch gekennzeichnet, dass die Durchgangslöcher asymmetrisch über die Mittelachse und nicht punktsymmetrisch angeordnet sind.

Ein Ausführungsbeispiel der Erfindung wird anhand der Figuren beschrieben, wobei sich die Erfindung nicht nur auf das Ausführungsbeispiel beschränkt. Folgende Figuren zeigen:
Fig. 1 eine Schnittansicht des ersten Ausführungsbeispiels des Druckreduzierventils,
Fig. 2 eine Ansicht von oben einer ersten Variante der Trägerplatte des ersten Ausführungsbeispiels des Druckreduzierventils,
Fig. 3 eine Ansicht von oben einer zweiten Variante der Trägerplatte des ersten Ausführungsbeispiels des Druckreduzierventils,
Fig. 4 eine Ansicht von oben einer dritten Variante der Trägerplatte des ersten Ausführungsbeispiels des Druckreduzierventils,
Fig. 5 eine Ansicht von oben einer vierten Variante der Trägerplatte des ersten Ausführungsbeispiels des Druckreduzierventils,
Fig. 6 eine Ansicht von oben einer fünften Variante der Trägerplatte des ersten Ausführungsbeispiels des Druckreduzierventils,
Fig. 7 eine Ansicht von oben einer zweiten Variante des zweiten Ausführungsbeispiels des Druckreduzierventils,
Fig. 8 eine Ansicht von oben einer ersten Variante der Trägerplatte des zweiten Ausführungsbeispiels des Druckreduzierventils,
Fig. 9 eine Ansicht von oben einer zweiten Variante der Trägerplatte des zweiten Ausführungsbeispiels des Druckreduzierventils,
Fig. 10 eine Ansicht von oben einer dritten Variante der Trägerplatte des zweiten Ausführungsbeispiels des Druckreduzierventils,
Fig. 11 eine Ansicht von oben einer vierten Variante der Trägerplatte des zweiten Ausführungsbeispiels des Druckreduzierventils,

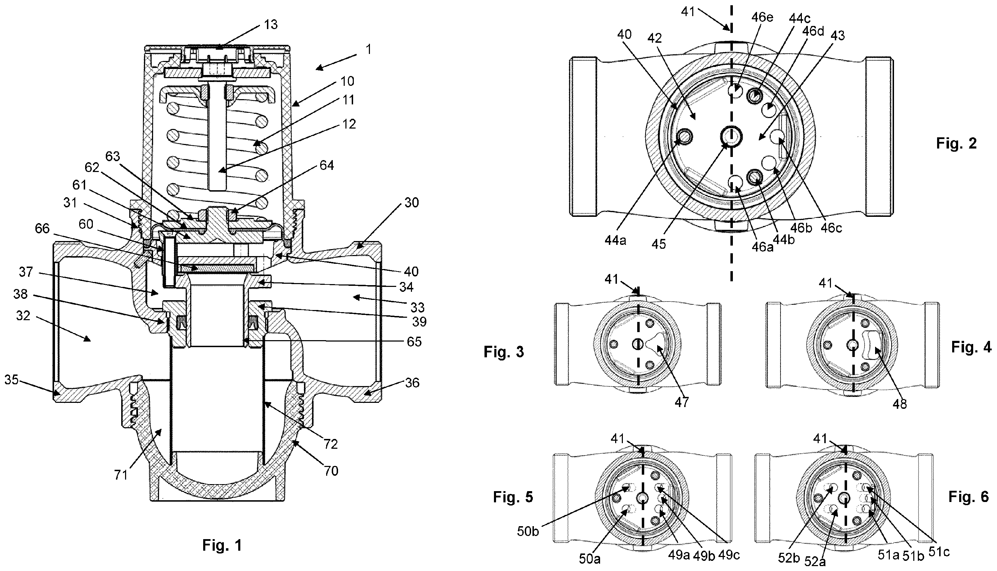

Fig. 1 zeigt das Druckreduzierventil 1, welches ein Gehäuse 30, eine Kappe 10 und eine Filtertasse 70 umfasst. Das Gehäuse hat einen unteren Schraubansatz und einen oberen Schraubansatz. Die Kappe ist in den oberen Schraubansatz auf das Gehäuse aufgeschraubt. Die Filtertasse ist in den unteren Schraubansatz auf das Gehäuse aufgeschraubt.

Das Gehäuse besitzt einen horizontal ansetzenden Einlassstutzen 35 und einen gegenüberliegenden Auslassstutzen 36. Nach unten erstreckt sich ein Filterraum 71 mit dem unteren Schraubenansatz. Der Innenraum des Einlassstutzens bildet ein Einlassraum 32 für das Medium und der Innenraum des Auslassstutzens bildet ein Auslassraum 33 für das Medium. Nach oben, dem Filterraum gegenüberliegend, befindet sich ein Ventilraum 37. Der Übergang vom Filterraum zum Ventilraum wird von einer vertikalen Innengewindebohrung 38 gebildet, die nach oben in einer Schulterauflage mündet. Die Strömung im Einlassraum wird von einer Wandung in den Filterraum geleitet. Die Wandung versperrt den direkten Zugang vom Filterraum zum Auslassstutzen. Daher gibt es keinen direkten Übergang vom Einlassstutzen in den Auslassstutzen. Die Strömung muss somit durch die Innengewindebohrung fliessen.

In die Filtertasse ist ein, in den Filterraum angeordneter Filter 72, eingesetzt. In die Innengewindebohrung ist eine Buchse 39 eingeschraubt. Durch die Buchse erstreckt sich eine zentrische Bohrung mit einer radial umlaufenden Nut, in welcher ein Dichtungsring sitz.

Eine Baugruppe ist im Gehäuse so angeordnet, sodass der statische Austrittsdruck konstant gehalten wird. Die Baugruppe setzt sich aus einem Membranteller 61, einer Membran 62, einem Membrandeckel 63, einer Mutter 64, einer Trägerplatte 40, und einem Schieber zusammen.

Der Schieber besteht aus einem abwärts gerichteten Schieberrohrstück 65 und einem oben an das Schieberrohrstück angesetzten scheibenförmigen Schieberflansch 34. Der Schieber ist so angeordnet, dass das Schieberrohrstück in die zentrische Bohrung passt und in die Vertikale Richtung bewegbar ist. Die Mündung des Rohrstücks überragt die Oberseite des Schieberflansches geringfügig und ist konisch angeschrägt, sodass die radial umlaufende Innenkante des Schieberrohrstücks schneidenartig ausgebildet ist. Vom Schieberflansch ragen drei stabförmige, jeweils um 120° versetzte Distanzelemente 60 zur Unterseite des Membrantellers. Die Distanzelemente sind sowohl am Schieberflansch als auch am Membranteller fest angebracht und halten somit beide im parallelen Abstand zueinander. Ein Distanzelement besteht vorzugsweise aus einer Senkschraube, deren Kopf in der Oberseite des Membrantellers versenkt ist und deren Gewindeschaft in den Schieberflansch eingeschraubt ist. Der Abstand zwischen dem Schiebeflansch und dem Membranteller wird durch eine zwischengefügte, auf den Gewindeschaft aufgeschobene Hülse, gehalten.

Zwischen den Schieberflansch und den Membranteller ist die Trägerplatte eingefügt. In der Trägerplatte sind drei zu den Distanzelemente komplementäre Durchgangslöcher 44a, 44b, 44c, wie in der Figur 2 gezeigt sind, vorgesehen, so dass die Distanzelemente ungehindert durch die Durchgangslöcher fahren können. An der Unterseite ist auf die Trägerplatte eine Scheibendichtung 66 aufgebracht, welche der Mündung gegenüberliegt und so bemessen ist, dass sie die Mündung vollständig verschliessen kann.

Zwischen den Membranteller und den Membrandeckel ist die Membran eingefügt. Von dem Membranteller erstreckt sich ein Gewindezapfgen nach oben, durch eine Bohrung im Membrandeckel hindurch. Auf diesen Gewindezapfen ist die Mutter 64 festgeschraubt, so dass der Membrandeckel 63 auf den Membranteller gedrückt wird und die Membran dazwischen fixiert ist. Die Membran hat eine Öffnung für den gewindezapfen und einen Wulst um den Membrandeckel herum. Der Wulst in der Membran gewährleistet die begrenzte, axiale Beweglichkeit der Einheit aus Schieber und der mit diesem starr verbundenen Membranteller und Membrandeckel.

Im oberen Schraubansatz 31 ist eine Kappe 10 auf das Gehäuse aufgeschraubt. In diesem Zustand drückt die Kappe auf den Rand der Membran, so dass die Membran zwischen die Kappe und das Gehäuse geklemmt ist. Die Kappe besitzt eine Öffnung auf der Oberseite. Innen besitzt die Kappe unterhalb der Kappenoberseite liegende Abstandrippen 14. Auf den Abstandsrippen stützt sich eine zwischen Kopf der Einstellschraube und eine auf letzteren aufgeschraubte Mehrkantmutter eingefügt Unterlegscheibe ab, dadurch die Einstellschraube auf der Kappe montiert ist. Auf die Einstellschraube ist zusätzlich ein Federteller mit Feder 11 aufgeschoben, in dessen profilierter Vertiefung die Mehrkantmutter sitzt, so dass der Federteller rotationsgesichert ist. Bei Drehen der Einstellschraube kann man den Federteller somit in mehr oder weniger grossem Abstand von der Kappenoberseite einstellen. Die Spannung des Federtellers drückt auf den Membrandeckel.

Im montierten Zustand steckt das Rohrstück in der Bohrung der Buchse. Die Trägerplatte sitzt mit ihrem Aussenrand auf einer am Gehäuse, im unteren Schraubansatz gelegenen Ringschulter auf.

Figur 1 zeigt den geschlossenen Zustand des Schiebers, in dem die Mündung des Rohrstücks an die Scheibendichtung ansetzt und damit verschlossen ist. Ein über den Einlassstutzen in das Druckreduzierventil einströmendes Medium würde nach passieren des Filters in den Filterraum gelangen, dem Rohstück zufliessen und schliesslich an der die Mündung verschliessenden Scheibendichtung anstehen. Dieser Zustand stellt sich ein, wenn der Mediumsdruck im sekundärseitigen Entnahmenetz über dem an der Stellschraube eingestellten Sollwert liegt. Der sekundärseitige Mediumsdruck wirkt durch die Durchgangslöcher in der Trägerplatte auf die Unterseite der Membran. Die Membran hat das Bestreben, nach oben auszuweichen und zieht dabei den mit der Membran verbundenen Rohrstück hoch, bis die Mündung an der Scheibendichtung anschlägt. Die derzeit eingestellte Kraft an den Federn ist gleich oder geringer als die vom sekundärseitigen Mediumsdruck auf die Membran wirkende Kraft.

Falls der Mediumsdruck im sekundärseitigen Entnahmenetz unter dem an der Stellschraube eingestellten Sollwert liegt, wird die Membran gegen den zu schwachen Druck auf der Sekundärseite nach unten gedrückt und zugleich entlang des Rohrstücks abwärts bewegt. Somit ergibt sich ein Durchlassspalt zwischen der Mündung und der Scheibendichtung. Das Medium kann durch den Durchlassspalt in die sekundäre Seite fliessen.

Figur 2 zeigt eine Variant der Trägerplatte. Die Trägerplatte kann durch eine Mittellinie 41 in zwei Fläche geteilt werden. Die Fläche auf der linken Seite ist als eine eintrittsseitige Fläche 42 definiert und die Fläche auf der rechten Seite ist als eine austrittsseitige Fläche 43 definiert. Auf der eintrittsseitigen Fläche ist eine Verbindungsbohrung 44a geformt zum Durchdringen des Distanzelementes. Auf der eintrittsseitigen Fläche sind zwei weitere Verbindungsbohrungen 44b, 44c und fünf austrittsseitige Bohrungen 46a, 46b, 46c, 46d, 46e geformt. Die austrittsseitigen Bohrungen dienen zum Ausgleich des statischen Drucks auf der sekundären Seite. Die Verbindungsbohrungen und die austrittsseitigen Bohrungen sind weder bezüglich der Mittellinie Achsen- noch Punktsymmetrisch angeordnet. Die summierte Fläche der austrittsseitigen Bohrungen und der Verbindungsbohrungen auf der austrittsseitigen Fläche ist viel grösser als die summierte Fläche der Verbindungsbohrungen auf der eintrittsseitigen Fläche. In dieser Variant, drei Distanzelemente sind vorgesehen. Die Anzahl der Distanzelemente ist jedoch nicht auf drei eingeschränkt.

Figuren 3, 4, 5, und 6 zeigen die anderen Varianten der Trägerplatte, insbesondere die Anordnung der Bohrungen. Die Trägerplatte in der Figur 3 besitzt ein austrittseitige Bohrung 47. Diese Bohrung hat eine dreieckige Form mit gekrümmten Kanten. Die austrittsseitige Bohrung in der Figur 4 hat eine längliche Form mit gekrümmten Kanten.

Durchgangslöcher können in senkrechter Weise oder unter einem Winkel eingebracht sein. Figur 4 zeigt eine Schrägbohrung, welche unter einem definierten Winkel eingebracht ist. Figuren 5 und 6 zeigen die runde Austrittsbohrungen. Zudem sind diese Bohrungen ebenfalls Schrägbohrungen.

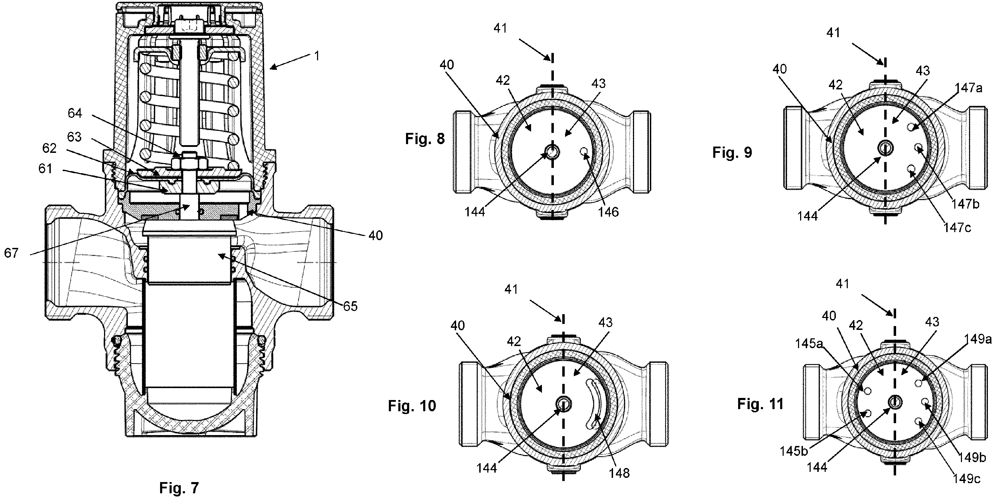

Figur 7 zeigt ein zweites Ausführungsbeispiel des Druckreduzierventils. Diese Variante unterscheidet sich von der Variante von der Figur 1 nur dadurch, dass eine Zugstange 67 vorgesehen ist anstatt der Distanzelemente. An dem Rohrstück sind Stege in horizontal Richtung nach innen angebracht, um die Zugstange darauf zu montieren. Die Zugstange ist sowohl mit dem Rohrstück des Schiebers verbunden und als auch am Membranteller fest angebracht und halten somit beide parallel zueinander.

Figur 8, 9, 10 und 11 zeigen die Varianten der Trägerplatte des zweiten Ausführungsbeispiels des Druckreduzierventils, insbesondere die Anordnung der Bohrungen. Die Trägerplatte in der Figur 8 besitzt eine Verbindungsbohrung 144, welche in der Mitte der Trägerplatte angeordnet ist. Diese Verbindungsbohrung ist ein Durchbruch für die Zugstange. Auf der austrittsseitigen Fläche ist eine Austrittsbohrung 146 vorgesehen. Es gibt keine eintrittsseitige Bohrung in dieser Variante. Die Trägerplatte in der Figur 9 besitzt mehre austrittsseitige Bohrungen 147a, 147b, 147c. Figur 10 zeigt eine Variante mit einer austrittsseitigen Bohrung auf der austrittsseitigen Fläche. Diese Bohrung ist jedoch nicht rund, sondern ist länglich und hat gekrümmte Kanten. Zudem hat diese Bohrung einen definierten Winkel. Figur 11 zeigt eine Variante mit zusätzlichen eintrittsseitigen Bohrungen 145a, 145b. Die austrittsseitige Bohrungen 149a, 149b, 149c sind auf der austrittsseitigen Fläche angeordnet. In allen Varianten ist die summierte Fläche der Bohrungen auf der austrittsseitigen Fläche grösser als die summierte Fläche der Bohrungen auf der eintrittsseitigen Fläche.

### Bezugszeichenliste

1 Druckreduzierventil
10 Kappe
11 Feder
12 Einstellschraube
13 Öffnung
30 Gehäuse
32 Einlassraum
33 Auslassraum
34 Schieberflansch
35 Einlassstutzen
36 Auslassstutz
37 Ventilraum
38 Innengewindebohrung
39 Buchse
40 Trägerplatte
41 Mittellinie
42 eintrittsseitige Fläche
43 austrittsseitige Fläche
44a, 44b, 44c Verbindungsbohrung
45 Zentrierbohrung
46a, 46b, 46c, 46d austrittsseitige Bohrung
47, 48 austrittsseitige Bohrung
49a, 49b, 49c austrittsseitige Bohrung
50a, 50b eintrittsseitige Bohrung
51a, 51b, 51c austrittsseitige Bohrung
60 Distanzelement
61 Membranteller
62 Membran
63 Membrandeckel
64 Mutter
65 Schieberrohrstück
67 Zugstange
70 Filtertasse
71 Filterraum
72 Filter
144 Verbindungsbohrung
146, 148 austrittsseitige Bohrung
49a, 49b, 49c austrittsseitige Bohrung
145a, 145b eintrittsseitige Bohrung
149a, 149b, 149c austrittsseitige Bohrung

## Patentansprüche

1. Druckreduzierventil (1) für Medien, insbesondere für nichtaggressive, flüssige, gas- oder dampfförmige Medien umfassend:
a. ein Gehäuse (30), durch welches das Medium von einer primären Seite zur sekundären Seite durchströmt;
b. eine Feder (11), welche im Gehäuse angeordnet ist;
c. eine Membran, die im Gehäuse eingespannt ist und einerseits unter Federspannung der Feder steht und andererseits vom Mediumsdruck auf der Sekundärseite beaufschlagt wird;
d. eine Trägerplatte mit mindestens zwei Durchgangslöcher, wobei die Trägerplatte fest am Gehäuse montiert ist und der sekundärseitige Mediumsdruck durch die Durchgangslöcher auf die Membran wirkt, wobei die Fläche der Trägerplatte durch eine Mittellinie (41) in eine eintrittsseitige Fläche (42) und eine austrittsseitige Fläche (43) geteilt ist;
e. ein druckentlasteter Schieber, der starr mit der Membran verbunden ist, wobei die starre Verbindung zwischen dem Schieber und der Membran aus mindestens einem Distanzelement (60) besteht, vorzugsweise aus mehreren Distanzelementen, dieses Distanzelement ist mit dem Schieber verbunden und ragt durch die Durchgangslöcher der Trägerplatte durch und ist mit einem membranstützenden Membranteller (61) verbunden.
f. eine Scheibendichtung (66), welche auf der Trägerplatte oder dem Schieber angeordnet ist, sodass bei Auslenkung der Membran die Mündung des Schiebers sich der Scheibendichtung bis zum völligen Verschluss nähern und bis zu einem maximalen Durchlassspalt entfernen kann.
**dadurch gekennzeichnet,**
**dass** die Durchgangslöcher asymmetrisch über die Mittellinie angeordnet sind und in der Umfangsrichtung asymmetrisch verteilt sind.

2. Druckreduzierventil nach Anspruch 1, wobei das Flächenverhältnis der aufsummierten Fläche der Durchgangslöcher (47, 48, 49a, 49b, 49c, 51a, 51b, 51c) auf der austrittsseitigen Fläche zu der aufsummierten Fläche der Durchgangslöcher (50a, 50b, 52a, 52b) auf der eintrittsseitigen Fläche 70% zu 30% beträgt.

3. Druckreduzierventil nach Anspruch 1 oder 2, wobei die totale Fläche der Durchgangslöcher weniger als 20% der Gesamtfläche der Trägerplatte beträgt.

4. Druckreduzierventil nach einer der Ansprüche 1 bis 3, wobei die Durchgangslöcher senkrechte Bohrung oder schräge Bohrung sind.

5. Druckreduzierventil nach einer der Ansprüche 1 bis 4, wobei die Durchgangslöcher rund, oval, vieleck sind.

6. Druckreduzierventil nach einer der Ansprüche 1 bis 5, wobei die Anzahl der Durchgangslöcher auf der austrittsseitigen Fläche grösser ist als die Anzahl der Durchgangslöcher auf der eintrittsseitigen Fläche.

7. Druckreduzierventil nach einer der Ansprüche 1 bis 6, wobei ein Durchgangsloch auf der eintrittsseitigen Fläche angeordnet ist und mindestens drei Durchgangslöcher auf der austrittsseitigen Fläche angeordnet sind.

8. Druckreduzierventil nach einer der Ansprüche 1 bis 6, wobei mindestens ein Durchgangsloch auf der austrittsseitigen Fläche grösser ist als die Durchgangslöcher auf der eintrittsseitigen Fläche.

9. Druckreduzierventil nach einer der Ansprüche 1 bis 6, wobei die Trägerplatte aus einem Material, welches mit der Trinkwasserverordnung hergestellt und konform ist, insbesondere die Trägerplatte ist aus einer Kupferlegierung, Kunststoff oder Edelstahl.

10. Trägerplatte für ein Druckreduzierventil für Medien, welches ein Gehäuse, eine Feder, eine Membran, ein druckentlasteter Schieber, und eine Scheibendichtung besitzt, umfassend mindestens zwei Durchgangslöcher, wobei das Medien durch das Gehäuse von einer primäre Seite zu einer sekundäre Seite durchströmt, wobei die Trägerplatte fest am Gehäuse montiert und der sekundärseitige Mediumsdruck wirkt durch die Durchgangslöcher auf die Membran, wobei die Fläche der Trägerplatte durch eine Mittellinie in eine Eintrittsfläche und eine Austrittsfläche geteilt ist, wobei die Feder im Gehäuse angeordnet ist, wobei die Membran im Gehäuse eingespannt ist und einerseits unter Federspannung der Feder steht und andererseits vom Mediumsdruck auf der Sekundärseite beaufschlagt wird, wobei der Schieber starr mit der Membran verbunden ist, wobei die starre Verbindung zwischen dem Schieber und der Membran aus mindestens einem Distanzelementen besteht, vorzugsweise mehrere Distanzelementen, dieses Distanzelement ist mit dem Schieber verbunden und ragt durch die Durchgangslöcher der Trägerplatte durch und ist mit einem Membran stützenden Membranteller verbunden, wobei die Schieberdichtung auf der Trägerplatte oder dem Schieber angeordnet ist, sodass bei Auslenkung der Membran die Mündung des Schiebers sich der Scheibendichtung bis zum völligen Verschluss nähern und bis zu einem maximalen Durchlassspalt entfernen kann,
**dadurch gekennzeichnet,**
**dass** die Durchgangslöcher asymmetrisch über die Mittellinie angeordnet sind und nicht punktsymmetrisch angeordnet sind.

11. Trägerplatte nach Anspruch 11, wobei das Flächenverhältnis der aufsummierten Fläche der Durchgangslöcher auf der austrittsseitigen Fläche zu der aufsummierten Fläche der Durchgangslöcher auf der eintrittsseitigen Fläche 70% zu 30% beträgt.

12. Trägerplatte nach Anspruch 11 oder 12, wobei die totale Fläche der Durchgangslöcher weniger als 20% der Gesamtfläche der Trägerplatte beträgt.
